# EUROPEAN PATENT SPECIFICATION

(11) **EP 3 127 282 B1**
(45) Date of publication and mention of the grant of the patent: **09.08.2017**
(21) Application number: 15721061.8
(22) Date of filing: 01.04.2015
(51) Int. Cl.: H04L 12/46

(54) **MULTICHANNEL LINK AGGREGATION WITH TDLS**
MEHRKANALIGE VERBINDUNGSAGGREGATION MIT TDLS
AGRÉGATION DE LIAISON MULTI-CANAL AVEC TDLS

(30) Priority: 03.04.2014 US 201414244735
(43) Date of publication of application: 08.02.2017
(73) Proprietor: Qualcomm Incorporated, San Diego, CA 92121-1714 (US)
(72) Inventor: ABRAHAM, Santosh Paul, San Diego, California 92121-1714 (US); CHERIAN, George, San Diego, California 92121-1714 (US); TIMARIU, Luiza, San Diego, California 92121-1714 (US)
(74) Representative: Wegner, Hans
(86) International application number: PCT/US2015/023886
(87) International publication number: WO 2015/153763

(56) References cited:
- EP-A1- 1 753 180
- WO-A1-2014/028094
- US-A1- 2008 170 573
- US-A1- 2013 054 761

## Description

### BACKGROUND

### Field

The present disclosure relates generally to communication systems, and more particularly, to aggregating multiple channel links using a tunneled direct link setup (TDLS) operation in a wireless communication system. The present disclosure further relates to aggregating multiple channel links using multiple band associations in a wireless communication system.

### Background

In many telecommunication systems, communications networks are used to exchange messages among several interacting spatially-separated devices. Networks may be classified according to geographic scope, which could be, for example, a metropolitan area, a local area, or a personal area. Such networks would be designated respectively as a wide area network (WAN), metropolitan area network (MAN), local area network (LAN), wireless local area network (WLAN), or personal area network (PAN). Networks also differ according to the switching/routing technique used to interconnect the various network nodes and devices (e.g., circuit switching vs. packet switching), the type of physical media employed for transmission (e.g., wired vs. wireless), and the set of communication protocols used (e.g., Internet protocol suite, Synchronous Optical Networking (SONET), Ethernet, etc.).

Wireless networks are often preferred when the network elements are mobile and thus have dynamic connectivity needs, or if the network architecture is formed in an ad hoc, rather than fixed, topology. Wireless networks employ intangible physical media in an unguided propagation mode using electromagnetic waves in the radio, microwave, infra-red, optical, etc. frequency bands. Wireless networks advantageously facilitate user mobility and rapid field deployment when compared to fixed wired networks.

US 2013/054761 A1 discloses a method for implementing a general packet radio service (GPRS) tunnel protocol (GTP) in a packet core (PC) of a third generation (3G) network having a split architecture where a control plane of the PC of the 3G network is in a cloud computing system, the cloud computing system including a controller, the controller to execute a plurality of control plane modules, the control plane to communicate with the data plane of the PC through a control plane protocol, the data plane implemented in a plurality of network elements of the 3G network by configuring switches implementing a data plane of the SGSN and GGSN and intermediate switches to establish a first and second GTP tunnel endpoint.

### SUMMARY

The invention is defined in the independent claims. The systems, methods, and devices of the invention each have several aspects, no single one of which is solely responsible for its desirable attributes. Without limiting the scope of this invention as expressed by the claims which follow, some features will now be discussed briefly. After considering this discussion, and particularly after reading the section entitled "Detailed Description" one will understand how the features of this invention provide advantages that include improved narrowband channel selection for devices in a wireless network.

One aspect of this disclosure provides an apparatus for wireless communication including a processing system. The processing system is configured to establish a first link with a second apparatus via a first band, wherein the first link is associated with a first medium access control (MAC) address, establish a second link with the second apparatus via a second band using a tunneling protocol, wherein the tunneling protocol uses the first link to establish the second link and the second link is associated with a second MAC address, receive data from the second apparatus via at least one of the first link or the second link, and provide data to the second apparatus via at least one of the first link or the second link, wherein the data received or provided via the first link includes the first MAC address and the data received or provided via the second link includes the second MAC address. The processing system may also be configured to perform a first association with a second apparatus via a first band to establish a first link, perform a second association with the second apparatus via a second band to establish a second link, and bind the first link to the second link to receive data from/provide data to the second apparatus via the first band and the second band.

Another aspect of this disclosure provides a method of wireless communication at an apparatus including establishing a first link with a second apparatus via a first band, wherein the first link is associated with a first medium access control (MAC) address, establishing a second link with the second apparatus via a second band using a tunneling protocol, wherein the tunneling protocol uses the first link to establish the second link and the second link is associated with a second MAC address, receiving data from the second apparatus via at least one of the first link or the second link, and providing data to the second apparatus via at least one of the first link or the second link, wherein the data received or provided via the first link includes the first MAC address and the data received or provided via the second link includes the second MAC address. Another method at the apparatus may include performing a first association with a second apparatus via a first band to establish a first link, performing a second association with the second apparatus via a second band to establish a second link, and binding the first link to the second link to receive data from/provide data to the second apparatus via the first band and the second band.

One aspect of this disclosure provides an apparatus for wireless communication including means for establishing a first link with a second apparatus via a first band, wherein the first link is associated with a first medium access control (MAC) address, means for establishing a second link with the second apparatus via a second band using a tunneling protocol, wherein the tunneling protocol uses the first link to establish the second link and the second link is associated with a second MAC address, means for receiving data from the second apparatus via at least one of the first link or the second link, and means for providing data to the second apparatus via at least one of the first link or the second link, wherein the data received or provided via the first link includes the first MAC address and the data received or provided via the second link includes the second MAC address. The apparatus may also include means for performing a first association with a second apparatus via a first band to establish a first link, means for performing a second association with the second apparatus via a second band to establish a second link, and means for binding the first link to the second link to receive data from/provide data to the second apparatus via the first band and the second band.

Another aspect of this disclosure provides a computer program product for wireless communications at an apparatus, the computer program product comprising a computer-readable medium having instructions executable to establish a first link with a second apparatus via a first band, wherein the first link is associated with a first medium access control (MAC) address, establish a second link with the second apparatus via a second band using a tunneling protocol, wherein the tunneling protocol uses the first link to establish the second link and the second link is associated with a second MAC address, receive data from the second apparatus via at least one of the first link or the second link, and provide data to the second apparatus via at least one of the first link or the second link, wherein the data received or provided via the first link includes the first MAC address and the data received or provided via the second link includes the second MAC address. The computer-readable medium may further have instructions executable to perform a first association with a second apparatus via a first band to establish a first link, perform a second association with the second apparatus via a second band to establish a second link, and bind the first link to the second link to receive data from/provide data to the second apparatus via the first band and the second band.

A further aspect of this disclosure provides a wireless node for wireless communication. The wireless node includes at least one antenna and a processing system. The processing system is configured to establish via the at least one antenna a first link with a second wireless node via a first band, wherein the first link is associated with a first medium access control (MAC) address, establish via the at least one antenna a second link with the second wireless node via a second band using a tunneling protocol, wherein the tunneling protocol uses the first link to establish the second link and the second link is associated with a second MAC address, receive data using the at least one antenna from the second wireless node via at least one of the first link or the second link, and provide data using the at least one antenna to the second wireless node via at least one of the first link or the second link, wherein the data received or provided via the first link includes the first MAC address and the data received or provided via the second link includes the second MAC address.

The processing system may also be configured to perform using the at least one antenna a first association with a second wireless node via a first band to establish a first link, perform using the at least one antenna a second association with the second wireless node via a second band to establish a second link, and bind the first link to the second link to receive data from/provide data to the second wireless node via the first band and the second band.

### BRIEF DESCRIPTION OF THE DRAWINGS

FIG. 1 shows an example wireless communication system in which aspects of the present disclosure may be employed.
FIG. 2 shows a functional block diagram of an example wireless device that may be employed within the wireless communication system of FIG. 1.
FIG. 3A is a diagram illustrating an example of link aggregation using TDLS according to an embodiment.
FIG. 3B is a diagram illustrating an example of link aggregation using TDLS according to an embodiment.
FIG. 4 is a diagram illustrating an example of creating an off-channel TDLS link between a virtual STA and a STA according to an embodiment.
FIG. 5 is a diagram illustrating an example of link aggregation using multiple band associations according to an embodiment.
FIG. 6 is a diagram illustrating an example of associating an AP and a STA via multiple bands and binding the multiple associations according to an embodiment.
FIG. 7 is a flowchart of an example method of wireless communication.
FIG. 8 is a flowchart of an example method of wireless communication.
FIG. 9 is a functional block diagram of an example wireless communication device.

### DETAILED DESCRIPTION

Various aspects of the novel systems, apparatuses, and methods are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the novel systems, apparatuses, and methods disclosed herein, whether implemented independently of, or combined with, any other aspect of the invention. For example, an apparatus may be implemented or a method may be practiced using any number of the aspects set forth herein. In addition, the scope of the invention is intended to cover such an apparatus or method which is practiced using other structure, functionality, or structure and functionality in addition to or other than the various aspects of the invention set forth herein. It should be understood that any aspect disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

Popular wireless network technologies may include various types of wireless local area networks (WLANs). A WLAN may be used to interconnect nearby devices together, employing widely used networking protocols. The various aspects described herein may apply to any communication standard, such as a wireless protocol.

In some aspects, wireless signals may be transmitted according to an 802.11 protocol using orthogonal frequency-division multiplexing (OFDM), direct-sequence spread spectrum (DSSS) communications, a combination of OFDM and DSSS communications, or other schemes. Implementations of the 802.11 protocol may be used for sensors, metering, and smart grid networks. Advantageously, aspects of certain devices implementing the 802.11 protocol may consume less power than devices implementing other wireless protocols, and/or may be used to transmit wireless signals across a relatively long range, for example about one kilometer or longer.

In some implementations, a WLAN includes various devices which are the components that access the wireless network. For example, there may be two types of devices: access points ("APs") and clients (also referred to as stations, or "STAs"). In general, an AP may serve as a hub or base station for the WLAN and a STA serves as a user of the WLAN. For example, a STA may be a laptop computer, a personal digital assistant (PDA), a mobile phone, etc. In an example, a STA connects to an AP via a WiFi (e.g., IEEE 802.11 protocol) compliant wireless link to obtain general connectivity to the Internet or to other wide area networks. In some implementations a STA may also be used as an AP.

An access point ("AP") may also comprise, be implemented as, or known as a NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, or some other terminology.

A station "STA" may also comprise, be implemented as, or known as an access terminal ("AT"), a subscriber station, a subscriber unit, a mobile station, a remote station, a remote terminal, a user terminal, a user agent, a user device, user equipment, or some other terminology. In some implementations an access terminal may comprise a cellular telephone, a cordless telephone, a Session Initiation Protocol ("SIP") phone, a wireless local loop ("WLL") station, a personal digital assistant ("PDA"), a handheld device having wireless connection capability, or some other suitable processing device connected to a wireless modem. Accordingly, one or more aspects taught herein may be incorporated into a phone (e.g., a cellular phone or smartphone), a computer (e.g., a laptop), a portable communication device, a headset, a portable computing device (e.g., a personal data assistant), an entertainment device (e.g., a music or video device, or a satellite radio), a gaming device or system, a global positioning system device, or any other suitable device that is configured to communicate via a wireless medium.

The term "associate," or "association," or any variant thereof should be given the broadest meaning possible within the context of the present disclosure. By way of example, when a first apparatus associates with a second apparatus, it should be understood that the two apparatus may be directly associated or intermediate apparatuses may be present. For purposes of brevity, the process for establishing an association between two apparatuses will be described using a handshake protocol that requires an "association request" by one of the apparatus followed by an "association response" by the other apparatus. It will be understood by those skilled in the art the handshake protocol may require other signaling, such as by way of example, signaling to provide authentication.

Any reference to an element herein using a designation such as "first," "second," and so forth does not generally limit the quantity or order of those elements. Rather, these designations are used herein as a convenient method of distinguishing between two or more elements or instances of an element. Thus, a reference to first and second elements does not mean that only two elements can be employed, or that the first element must precede the second element. In addition, terminology that recites at least one of a combination of elements (e.g., "at least one of A, B, or C") refers to one or more of the recited elements (e.g., A, or B, or C, or any combination thereof).

As discussed above, certain devices described herein may implement the 802.11 standard, for example. Such devices, whether used as a STA or AP or other device, may be used for smart metering or in a smart grid network. Such devices may provide sensor applications or be used in home automation. The devices may instead or in addition be used in a healthcare context, for example for personal healthcare. They may also be used for surveillance, to enable extended-range Internet connectivity (e.g. for use with hotspots), or to implement machine-to-machine communications.

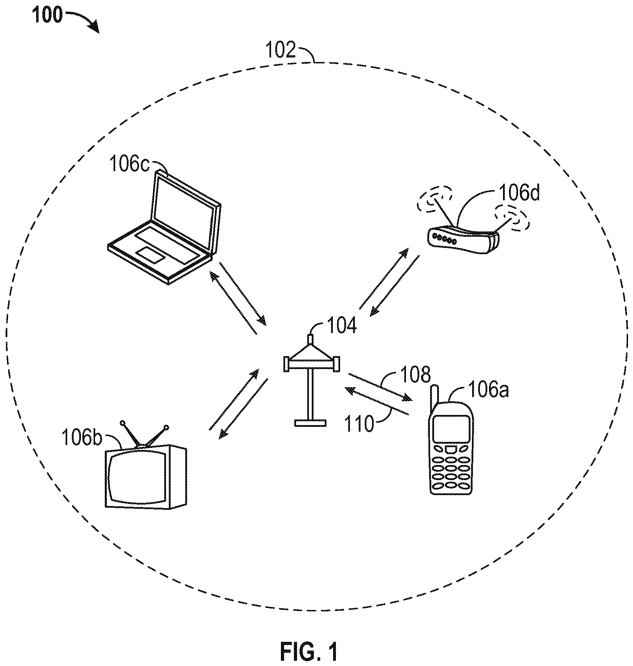

FIG. 1 shows an example wireless communication system 100 in which aspects of the present disclosure may be employed. The wireless communication system 100 may operate pursuant to a wireless standard, for example the 802.11 standard. The wireless communication system 100 may include an AP 104, which communicates with STAs 106.

A variety of processes and methods may be used for transmissions in the wireless communication system 100 between the AP 104 and the STAs 106. For example, signals may be sent and received between the AP 104 and the STAs 106 in accordance with OFDM/OFDMA techniques. If this is the case, the wireless communication system 100 may be referred to as an OFDM/OFDMA system. Alternatively, signals may be sent and received between the AP 104 and the STAs 106 in accordance with CDMA techniques. If this is the case, the wireless communication system 100 may be referred to as a CDMA system.

A communication link that facilitates transmission from the AP 104 to one or more of the STAs 106 may be referred to as a downlink (DL) 108, and a communication link that facilitates transmission from one or more of the STAs 106 to the AP 104 may be referred to as an uplink (UL) 110. Alternatively, a downlink 108 may be referred to as a forward link or a forward channel, and an uplink 110 may be referred to as a reverse link or a reverse channel. In some aspects, DL communications may include unicast or multicast traffic indications.

The AP 104 may suppress adjacent channel interference (ACI) in some aspects so that the AP 104 may receive UL communications on more than one channel simultaneously without causing significant analog-to-digital conversion (ADC) clipping noise. The AP 104 may improve suppression of ACI, for example, by having separate finite impulse response (FIR) filters for each channel or having a longer ADC backoff period with increased bit widths.

The AP 104 may act as a base station and provide wireless communication coverage in a basic service area (BSA) 102. The AP 104 along with the STAs 106 associated with the AP 104 and that use the AP 104 for communication may be referred to as a basic service set (BSS). It should be noted that the wireless communication system 100 may not have a central AP 104, but rather may function as a peer-to-peer network between the STAs 106. Accordingly, the functions of the AP 104 described herein may alternatively be performed by one or more of the STAs 106.

The AP 104 may transmit on one or more channels (e.g., multiple narrowband channels, each channel including a frequency bandwidth) a beacon signal (or simply a "beacon"), via a communication link such as the downlink 108, to other nodes STAs 106 of the system 100, which may help the other nodes STAs 106 to synchronize their timing with the AP 104, or which may provide other information or functionality. Such beacons may be transmitted periodically. In one aspect, the period between successive transmissions may be referred to as a superframe. Transmission of a beacon may be divided into a number of groups or intervals. In one aspect, the beacon may include, but is not limited to, such information as timestamp information to set a common clock, a peer-to-peer network identifier, a device identifier, capability information, a superframe duration, transmission direction information, reception direction information, a neighbor list, and/or an extended neighbor list, some of which are described in additional detail below. Thus, a beacon may include information both common (e.g., shared) amongst several devices, and information specific to a given device.

In some aspects, a STA 106 may be required to associate with the AP 104 in order to send communications to and/or receive communications from the AP 104. In one aspect, information for associating is included in a beacon broadcast by the AP 104. To receive such a beacon, the STA 106 may, for example, perform a broad coverage search over a coverage region. A search may also be performed by the STA 106 by sweeping a coverage region in a lighthouse fashion, for example. After receiving the information for associating, the STA 106 may transmit a reference signal, such as an association probe or request, to the AP 104. In some aspects, the AP 104 may use backhaul services, for example, to communicate with a larger network, such as the Internet or a public switched telephone network (PSTN).

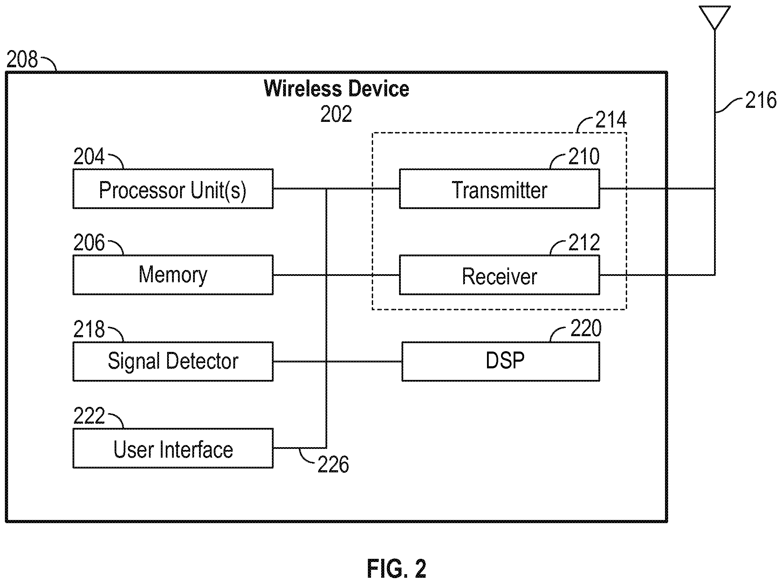

FIG. 2 shows an example functional block diagram of a wireless device 202 that may be employed within the wireless communication system 100 of FIG. 1. The wireless device 202 is an example of a device that may be configured to implement the various methods described herein. For example, the wireless device 202 may comprise the AP 104 or one of the STAs 106.

The wireless device 202 may include a processor 204 which controls operation of the wireless device 202. The processor 204 may also be referred to as a central processing unit (CPU). Memory 206, which may include both read-only memory (ROM) and random access memory (RAM), may provide instructions and data to the processor 204. A portion of the memory 206 may also include non-volatile random access memory (NVRAM). The processor 204 typically performs logical and arithmetic operations based on program instructions stored within the memory 206. The instructions in the memory 206 may be executable to implement the methods described herein.

The processor 204 may comprise or be a component of a processing system implemented with one or more processors. The one or more processors may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information.

The processing system may also include machine-readable media for storing software. Software shall be construed broadly to mean any type of instructions, whether referred to as software, firmware, middleware, microcode, hardware description language, or otherwise. Instructions may include code (e.g., in source code format, binary code format, executable code format, or any other suitable format of code). The instructions, when executed by the one or more processors, cause the processing system to perform the various functions described herein.

The wireless device 202 may also include a housing 208 that may include a transmitter 210 and/or a receiver 212 to allow transmission and reception of data between the wireless device 202 and a remote location. The transmitter 210 and receiver 212 may be combined into a transceiver 214. An antenna 216 may be attached to the housing 208 and electrically coupled to the transceiver 214. The wireless device 202 may also include (not shown) multiple transmitters, multiple receivers, multiple transceivers, and/or multiple antennas.

The wireless device 202 may also include a signal detector 218 that may be used in an effort to detect and quantify the level of signals received by the transceiver 214. The signal detector 218 may detect such signals as total energy, energy per subcarrier per symbol, power spectral density and other signals. The wireless device 202 may also include a digital signal processor (DSP) 220 for use in processing signals. The DSP 220 may be configured to generate a packet for transmission. In some aspects, the packet may comprise a physical layer data unit (PPDU).

The wireless device 202 may further comprise a user interface 222 in some aspects. The user interface 222 may comprise a keypad, a microphone, a speaker, and/or a display. The user interface 222 may include any element or component that conveys information to a user of the wireless device 202 and/or receives input from the user.

The various components of the wireless device 202 may be coupled together by a bus system 226. The bus system 226 may include a data bus, for example, as well as a power bus, a control signal bus, and a status signal bus in addition to the data bus. Components of the wireless device 202 may be coupled together or accept or provide inputs to each other using some other mechanism.

Although a number of separate components are illustrated in FIG. 2, one or more of the components may be combined or commonly implemented. For example, the processor 204 may be used to implement not only the functionality described above with respect to the processor 204, but also to implement the functionality described above with respect to the signal detector 218 and/or the DSP 220. Further, each of the components illustrated in FIG. 2 may be implemented using a plurality of separate elements.

WLAN devices (e.g., AP 104 or STA 106) capable of dual band dual concurrent (DBDC) operation may be provided with improved aggregate throughput of a basic service set (BSS) by leveraging a tunneled direct link setup (TDLS) operation to enable use of multiple channels (dual band operation). TDLS allows devices to automatically create a link between each other after accessing a wireless network, removing the need to transmit data through the AP 104 and avoiding delays caused by congestion.

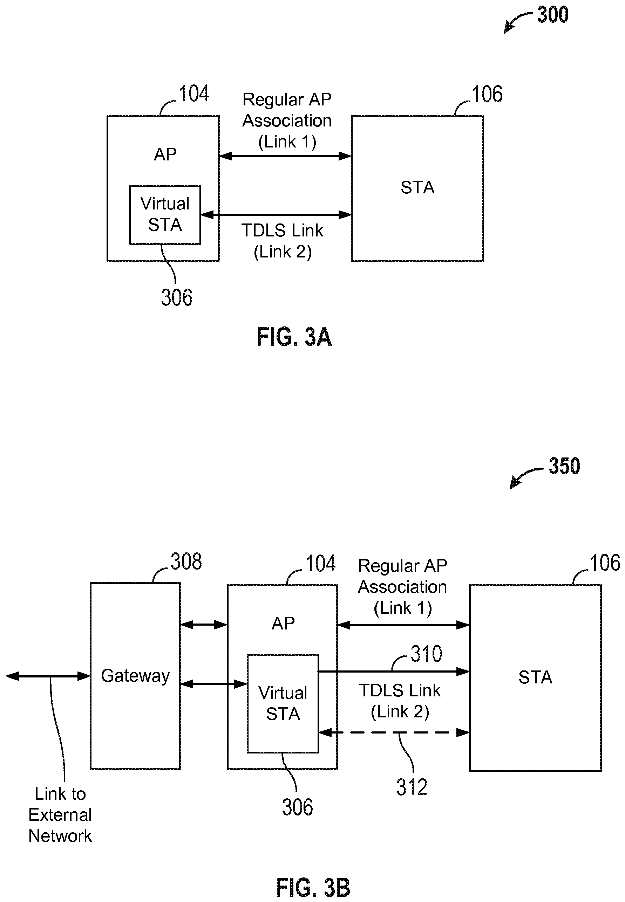

FIG. 3A is a diagram 300 illustrating an example of link aggregation using TDLS according to an embodiment. DBDC implementation allows for the STA 106 to achieve higher throughput by simultaneously operating on a 2.4 GHz band and a 5 GHz band. Referring to FIG. 3A, in an implementation, a first link (Link 1) between the STA 106 and the AP 104 may be created by associating the STA 106 with the AP 104 on one interface (e.g., 2.4 GHz band or 5 GHz band). A second link (Link 2) may then be created between the STA 106 and the AP 104 on another interface by creating an off-channel TDLS link between the STA 106 and a virtual STA 306 included within the AP 104. In an aspect, the virtual STA 306 is first associated with the AP 104. After successful association, the virtual STA 306 initiates a TDLS link to the STA 106. The AP 104 and the virtual STA 306 may have different medium access control (MAC) addresses.

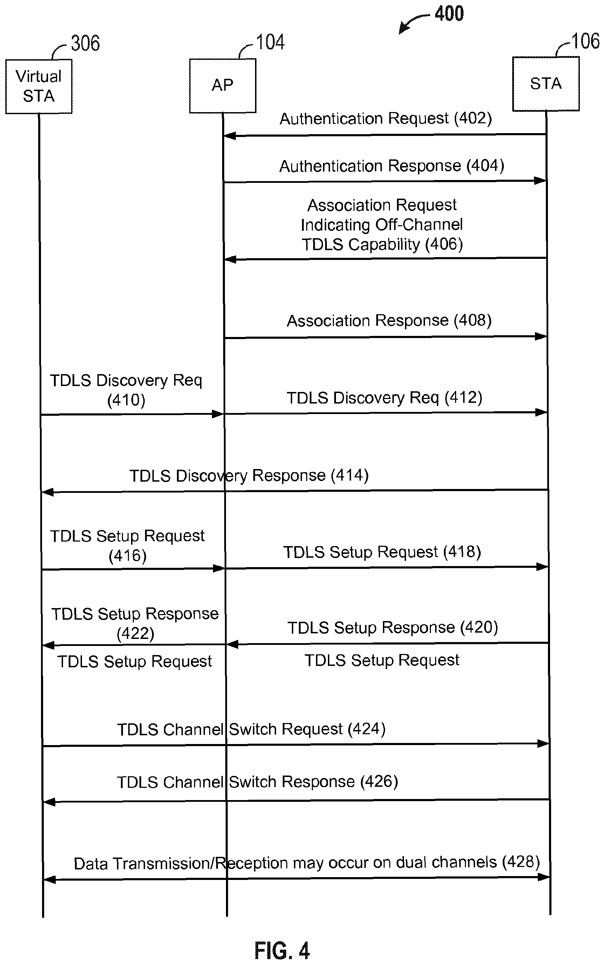

FIG. 4 is a diagram 400 illustrating an example of creating an off-channel TDLS link between the virtual STA 306 and the STA 106 according to an embodiment. Initially, the STA 106 and the AP 104 perform an authentication procedure, wherein the STA 106 sends at 402 an authentication request to the AP 104. The AP 104 responds by sending at 404 an authentication response to the STA 106. After successful authentication, the STA 106 sends at 406 an association request to the AP 104. The association request may include an indication that the STA 106 is capable of supporting an off-channel TDLS link. At 408, the AP 104 sends an association response to the STA 106.

After successful association between the STA 106 and the AP 104, the virtual STA 306 within the AP 104 initiates a TDLS link to the STA 106 by sending at 410 a TDLS discovery request to the AP 104. At 412, the AP 104 forwards the TDLS discovery request to the STA 106. At 414, the STA 106 sends a TDLS discovery response to the virtual STA 306 indicating interest in the TDLS link.

The virtual STA 306 and the STA 106 then perform a TDLS setup procedure via the AP 104. At 416, the virtual STA 306 sends a TDLS setup request to the AP 104. At 418, the AP 104 forwards the TDLS setup response to the STA 106. At 420, the STA 106 sends a TDLS setup response (or TDLS setup request) to the AP 104. At 422, the AP 104 forwards the TDLS setup response (or TDLS setup request) to the virtual STA 306.

After successful TDLS setup, at 424, the virtual STA 306 sends a TDLS channel switch request to the STA 106. At 426, the STA 106 responds by sending a TDLS channel switch response to the virtual STA 306. At 428, data transmission and/or reception between the AP 104 and the STA 106 may occur on one channel (e.g., 2.4 GHz band or 5 GHz band) while data transmission and/or reception between the virtual STA 306 and the STA 106 may concurrently occur on an off-channel via the TDLS link.

FIG. 3B is a diagram 350 illustrating an example of link aggregation using TDLS according to an embodiment. Referring to FIG. 3B, a first link (Link 1) between the STA 106 and the AP 104 may be created by associating the STA 106 with the AP 104 on one interface (e.g., 2.4 GHz band or 5 GHz band). A second link (Link 2) may then be created between the STA 106 and the AP 104 on another interface by creating an off-channel TDLS link between the STA 106 and the virtual STA 306 included within the AP 104. The AP 104 may be connected to a gateway 308, which may be linked to an external network.

In an implementation, all uplink traffic (uplink data) from the STA 106 flows through the first link (Link 1). An address resolution protocol (ARP) table at the STA 106 may translate all uplink IP addresses for sending data to a Layer 2 address of the gateway 308. An 802.11 MAC layer may fill in the MAC address of the AP 104 (Basic Service Set ID (BSSID)).

Downlink traffic (downlink data) may flow through the first link (Link 1) or the second link (Link 2). In an implementation, downlink data may be restricted to flow through one of the links to ensure reduced contention between downlink and uplink streams. For example, downlink data frames of a given Transmission Control Protocol (TCP) may be restricted to the second link (Link 2) 310 and corresponding uplink TCP acknowledgments (ACKs) may be sent via the first link (Link 1).

In a further implementation, uplink data may flow through the second link (Link 2) 312. To enable uplink data flow through the second link 312, the AP 104 may set a MAC address of the virtual STA 306 to a MAC address of the gateway 308. The STA 106 having the second link (Link 2) setup will then automatically forward uplink data frames for the AP 104 using the second link (Link 2) 312. Alternatively, to enable uplink data flow through the second link 312, the ARP table at the STA 106 may be used. For example, the gateway IP address in the ARP table may be set to point to the MAC address of the virtual STA 306. The STA 106 will then shift all uplink traffic for the AP 104 to the second link (Link 2) 312.

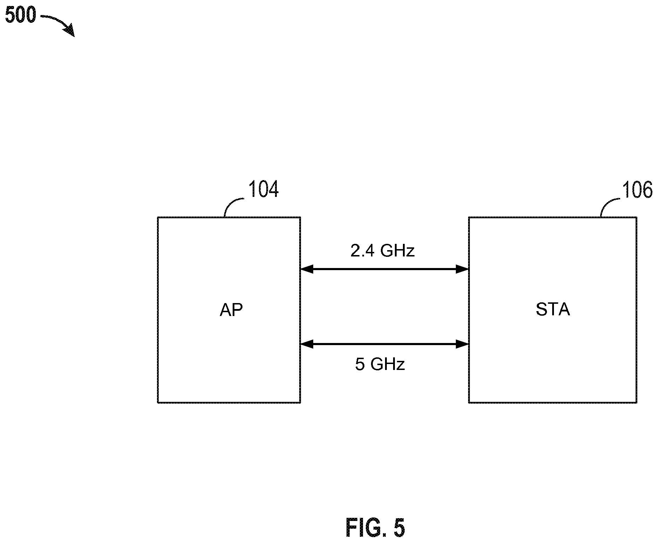

FIG. 5 is a diagram 500 illustrating an example of link aggregation using multiple band associations according to an embodiment. Referring to FIG. 5, the STA 106 is capable of communicating with the AP 104 on a plurality of bands (e.g., 2.4 GHz band and 5 GHz band; or base channel and secondary channel). In an implementation, the STA 106 and the AP 104 may be independently associated on the different bands. The STA 106 may indicate that both of the independent associations belong to the STA 106. An IP address may be obtained on a base channel. Address resolution protocol (ARP) caching may be performed with respect to a base channel MAC address. The AP 104 may decide which channel to use (base channel or secondary channel) for a downlink flow.

In an implementation, the STA 106 may associate with the AP 104 in each band using a standard association protocol. This may include authentication and key derivation. A second association in a second band may be triggered by a message from the AP 104. Alternatively, the STA 106 may autonomously decide to perform the second association based on an indication of dual band capability from the AP 104. The dual band capability from the AP 104 may be indicated via a probe response, an association response, or a beacon, for example.

In a further implementation, the AP 104 (or STA 106) may bind the independent associations to aggregate system throughput by communicating data via the 2.4 GHz band (2.4 GHz link) and the 5 GHz band (5 GHz link). For example, the independent associations may be bound such that at least a first portion of the data is communicated via the 2.4 GHz link and at least a second portion of the data is communicated via the 5 GHz link.

In an aspect, the AP 104 may ensure that the 2.4 GHz link and the 5 GHz link being bound are associated with the same STA 106. For example, the AP 104 may create a secret token with the STA 106 during association on the 2.4 GHz band. Thereafter, the AP 104 may receive during association on the 5 GHz band a message from the STA 106 verifying knowledge of the secret token. Upon verification of the secret token via the 5 GHz band, the AP 104 ensures that the 2.4 GHz link and the 5 GHz link are associated with the same STA 106. Alternatively, the AP 104 may utilize a same medium access control (MAC) address for communicating the data via the 2.4 GHz link and the 5 GHz link to ensure that the two links are associated with the same STA 106.

In an implementation, higher power efficiency may be obtained if a connection in one of the bands (2.4 GHz band or 5 GHz band) is allowed to remain dormant (but in an associated state) unless data is available. For example, a delivery traffic indication message (DTIM) interval may be larger on the 5 GHz band. The AP 104 may trigger wake up on the 5 GHz band by sending a message on the 2.4 GHz band. The message may indicate traffic availability on the 5 GHz band. Moreover, the message may be included in a beacon transmitted via the 2.4 GHz band. The STA 106 may use an unscheduled automatic power save delivery (U-APSD) trigger operation to retrieve the data on the 5 GHz band.

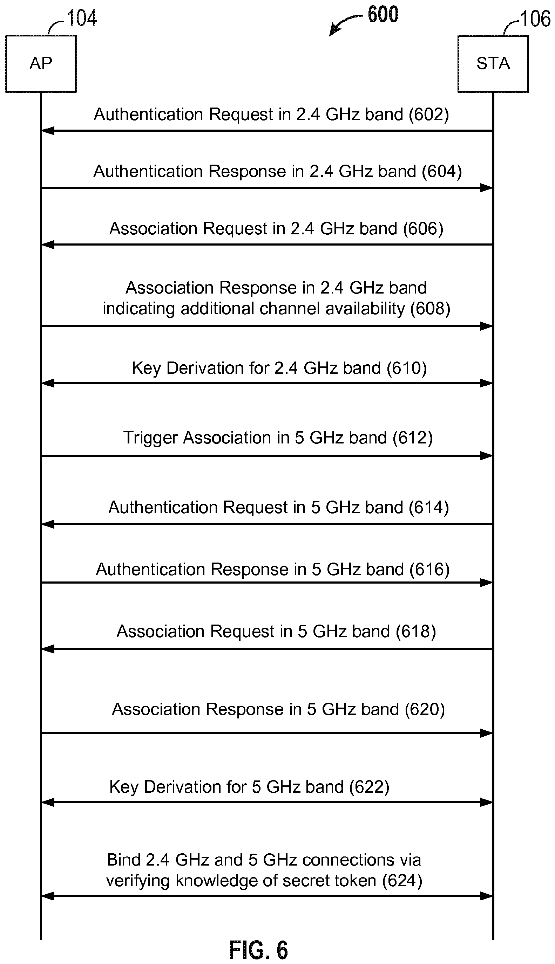

FIG. 6 is a diagram 600 illustrating an example of associating (linking) the AP 104 and the STA 106 via multiple bands and binding the multiple associations (links) according to an embodiment. Initially, the STA 106 and the AP 104 perform an authentication procedure via the 2.4 GHz band, wherein the STA 106 sends at 602 an authentication request to the AP 104. The AP 104 responds by sending at 604 an authentication response to the STA 106. After successful authentication, the STA 106 sends at 606 an association request to the AP 104 in the 2.4 GHz band. At 608, the AP 104 sends an association response to the STA 106. The association response may include an indication that the AP 104 is capable of supporting an additional channel (e.g., 5 GHz band). At 610, the STA 106 and the AP 104 perform key derivation for the 2.4 GHz band. The key derivation for the 2.4 GHz band may include the creation of a secret token (e.g., encrypted token) known only to the AP 104 and STA 106.

After successful association between the AP 104 and the STA 106 in the 2.4 GHz band, the AP 104 at 612 may trigger association in the 5 GHz band. At 614, the STA 106 sends an authentication request to the AP 104 in the 5 GHz band. At 616, the AP 104 responds by sending an authentication response to the STA 106. After successful authentication, the STA 106 sends at 618 an association request to the AP 104 in the 5 GHz band. At 620, the AP 104 sends an association response to the STA 106. At 622, the STA 106 and the AP 104 perform key derivation for the 5 GHz band. The key derivation for the 5 GHz may include the AP 104's reception of the secret token (e.g., encrypted token) created during association with the STA 106 in the 2.4 GHz band. The AP 104's receipt of the secret token verifies the STA 106's knowledge of the secret token. Receipt of the secret token further indicates to the AP 104 that that 2.4 GHz association with the STA 106 may appropriately be bound to the 5 GHz association with the STA 106. At 624, after successful association between the AP 104 and the STA 106 in the 5 GHz band, the AP 104 may bind the 2.4 GHz association and the 5 GHz association based on the verification that the STA 106 is aware of the secret token.

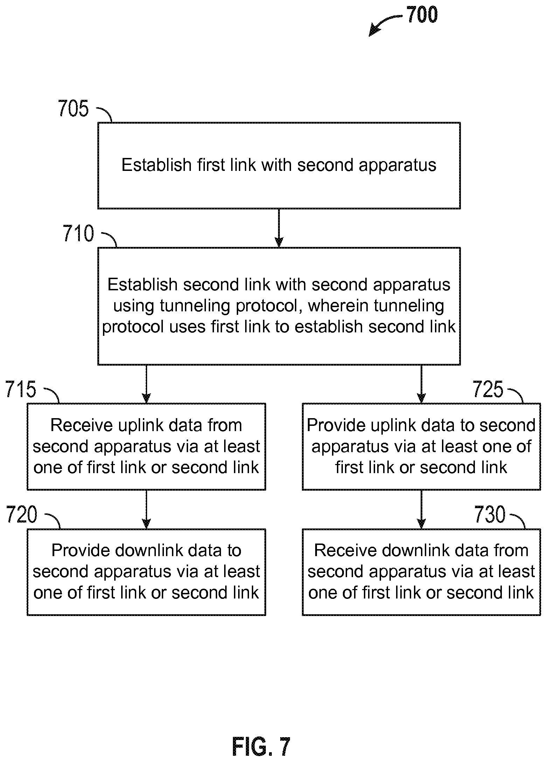

FIG. 7 is a flowchart of an example method 700 of wireless communication. The method 700 may be performed using an apparatus (e.g., the wireless device 202 of FIG. 2, for example). The apparatus may be implemented as a STA 106 or an AP 104, for example. Although the process 700 is described below with respect to the elements of wireless device 202 of FIG. 2, other components may be used to implement one or more of the steps described herein.

At block 705, the apparatus may establish a first link with a second apparatus via first band (e.g., 2.4 GHz band). For example, the first link between the apparatus and the second apparatus may be a link established via a standard association protocol and associated with a first medium access control (MAC) address. Establishing the first link may include establishing a first encryption key for the first link. At block 710, the apparatus may establish a second link (e.g., TDLS link) with the second apparatus via a second band (e.g., 5 GHz band) using a tunneling protocol (e.g., TDLS protocol). The second link may be associated with a second MAC address. Establishing the second link may include establishing a second encryption key for the second link. The tunneling protocol may use the first link to establish the second link. Establishing the first link and establishing the second link may be performed by the processor 204, the transmitter 210, and/or the receiver 212, for example.

When the apparatus is implemented as an AP (e.g., AP 104), the process 700 proceeds to block 715. At block 715, the apparatus receives uplink data from the second apparatus via at least one of the first link or the second link. Thereafter, at block 720, the apparatus provides (e.g., transmits) downlink data to the second apparatus via at least one of the first link or the second link. Receiving uplink data may be performed by the processor 204 and/or the receiver 212, for example. Providing downlink data may be performed by the processor 204 and/or the transmitter 210, for example.

In an aspect, the uplink data received or the downlink data provided via the first link may include the first MAC address (e.g., AP MAC address). The uplink data received or the downlink data provided via the second link may include the second MAC address (e.g., MAC address of a virtual STA included in an AP).

In a further aspect, the second MAC address associated with the second link may be provided to the second apparatus based on the first link. For example, a gateway IP address in an ARP table at the second apparatus may point to a MAC address of a virtual STA included in the AP. The uplink data received from the second apparatus via the second link may include the provided second MAC address.

In another aspect, the apparatus may be connected to a gateway (e.g., gateway 308). Accordingly, the receiving performed at block 715 may include setting a MAC address associated with the second link to a MAC address of the gateway. As such, the uplink data may be received from the second apparatus via the second link and include the MAC address of the gateway.

When the apparatus is implemented as a STA (e.g., STA 106), the process 700 proceeds from block 710 to block 725. At block 725, the apparatus provides (e.g., transmits) uplink data to the second apparatus via at least one of the first link or the second link. Thereafter, at block 730, the apparatus receives downlink data from the second apparatus via at least one of the first link or the second link. Providing uplink data may be performed by the processor 204 and/or the transmitter 210, for example. Receiving downlink data may be performed by the processor 204 and/or the receiver 212, for example.

In an aspect, the uplink data provided or the downlink data received via the first link may include the first MAC address (e.g., AP MAC address). The uplink data provided or the downlink data received via the second link may include the second MAC address (e.g., MAC address of a virtual STA included in an AP).

In another aspect, the second MAC address associated with the second link is identified based on the first link. For example, a gateway IP address in an ARP table at the apparatus may point to a MAC address of a virtual STA included in an AP. The uplink data provided to the second apparatus via the second link may be include the identified second MAC address. In a further aspect, the second apparatus may be connected to a gateway (e.g., gateway 308). Accordingly, the uplink data may be provided to the second apparatus via the second link and include a MAC address of the gateway.

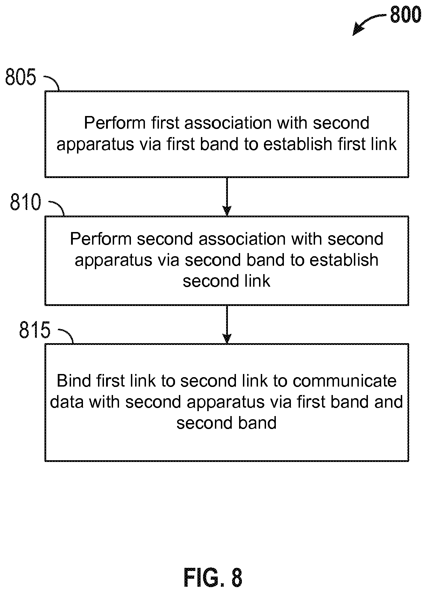

FIG. 8 is a flowchart of an example method 800 of wireless communication. The method 800 may be performed using an apparatus (e.g., the wireless device 202 of FIG. 2, for example). The apparatus may be implemented as a STA 106 or an AP 104, for example. Although the process 800 is described below with respect to the elements of wireless device 202 of FIG. 2, other components may be used to implement one or more of the steps described herein. Any one of the functions of the process 800 may be performed in combination with, or as alternative to, any of the functions discussed above with respect to blocks 705, 710, 715, 720, 725, and 730 of FIG. 7.

At block 805, the apparatus may perform a first association with a second apparatus via a first band (e.g., 2.4 GHz band) to establish a first link. At block 810, the apparatus may perform a second association with the second apparatus via a second band (e.g., 5 GHz band) to establish a second link. At block 815, the apparatus may bind the first link to the second link to communicate data with (e.g., receive data from and/or provide data to) the second apparatus via the first band and the second band. In an aspect, at least a first portion of the data is communicated via the first band and at least a second portion of the data is communicated via the second band. Performing the first association to establish the first link, performing the second association to establish the second link, and binding the first link to the second link may be performed by the processor 204, the transmitter 210, and/or the receiver 212, for example.

In an implementation, an encrypted token may be created when the first association is performed to establish the first link via the first band. Accordingly, the binding may include receiving via the second band a message from the second apparatus verifying knowledge of the encrypted token. Alternatively, the binding may include utilizing a same medium access control (MAC) address for communicating the data via the first band and the second band.

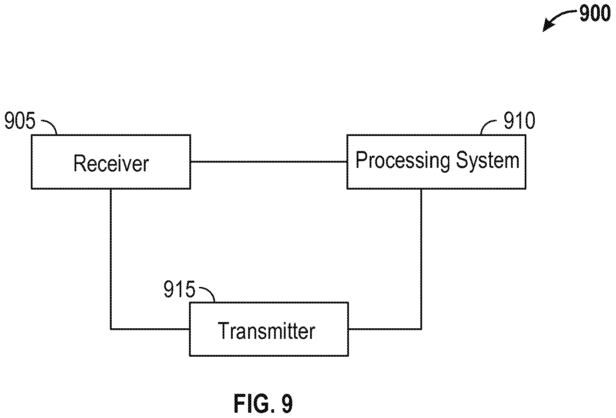

FIG. 9 is a functional block diagram of an example wireless communication device 900. The wireless communication device 900 may include a receiver 905, a processing system 910, and a transmitter 915 configured to establish a first link with a second device via first band, and establish a second link with the second device via a second band using a tunneling protocol, wherein the tunneling protocol uses the first link to establish the second link. The receiver 905 may be configured to receive uplink/downlink data from the second device via at least one of the first link or the second link. The transmitter 915 may be configured to provide uplink/downlink data to the second device via at least one of the first link or the second link. Furthermore, the receiver 905, the processing system 910, and the transmitter 915 may be configured to perform a first association with a second device via a first band to establish a first link, perform a second association with the second apparatus via a second band to establish a second link, and bind the first link to the second link to communicate data with the second device via the first band and the second band. Furthermore, the receiver 905, the processing system 910, and/or the transmitter 915 may be configured to perform one or more functions discussed above with respect to blocks 705, 710, 715, 720, 725, and 730 of FIG. 7 and blocks 805, 810, and 815 of FIG. 8. The receiver 905 may correspond to the receiver 212. The processing system 910 may correspond to the processor 204. The transmitter 915 may correspond to the transmitter 210.

Moreover, means for establishing a first link with a second apparatus via a first band, means for establishing a second link with the second apparatus via a second band using a tunneling protocol, wherein the tunneling protocol uses the first link to establish the second link, means for performing a first association with a second apparatus via a first band to establish a first link, means for performing a second association with the second apparatus via a second band to establish a second link, and means for binding the first link to the second link to communicate data with the second apparatus via the first band and the second band may comprise the receiver 905, the processing system 910, and/or the transmitter 915. Means for receiving uplink data from the second apparatus via at least one of the first link or the second link and means for receiving downlink data from the second apparatus via at least one of the first link or the second link may comprise the receiver 905. Means for providing downlink data to the second apparatus via at least one of the first link or the second link and means for providing uplink data to the second apparatus via at least one of the first link or the second link may comprise the transmitter 915.

As used herein, a phrase referring to "at least one of" a list of items refers to any combination of those items, including single members. As an example, "at least one of: A, B, or C" is intended to cover: A, or B, or C, or any combination thereof (e.g., A-B, A-C, B-C, and A-B-C).

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

In one or more aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Thus, in some aspects computer readable medium may comprise non-transitory computer readable medium (e.g., tangible media). In addition, in some aspects computer readable medium may comprise transitory computer readable medium (e.g., a signal). Combinations of the above should also be included within the scope of computer-readable media.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware or any combination thereof. If implemented in software, the functions may be stored as one or more instructions on a computer-readable medium. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray® disc where disks usually reproduce data magnetically, while discs reproduce data optically with lasers.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein. For certain aspects, the computer program product may include packaging material.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

While the foregoing is directed to aspects of the present disclosure, other and further aspects of the disclosure may be devised without departing from the basic scope thereof, and the scope thereof is determined by the claims that follow.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Unless specifically stated otherwise, the term "some" refers to one or more. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

## Claims

1. An apparatus for wireless communication, comprising:
a processing system configured to:
establish (705) a first link with a second apparatus via a first band,
wherein the first link is associated with a first medium access control, MAC address;
establish (710) a second link with the second apparatus via a second band using a tunneling protocol, wherein the tunneling protocol uses the first link to establish the second link and the second link is associated with a second MAC address;
receive (715; 730) data from the second apparatus via at least one of the first link or the second link; and
provide (720; 725) data to the second apparatus via at least one of the first link or the second link,
wherein the data received or provided via the first link includes the first MAC address, and
wherein the data received or provided via the second link includes the second MAC address.

2. The apparatus of claim 1, wherein:
the second MAC address associated with the second link is provided to or received from the second apparatus via the first link.

3. The apparatus of claim 1, wherein the apparatus is configured to be connected to a gateway (308), and wherein the processing system is configured to receive or provide by:
setting the second MAC address associated with the second link to a MAC address of the gateway (308),
wherein the data received from or provided to the second apparatus via the second link includes the MAC address of the gateway (308).

4. The apparatus of claim 1, wherein the processing system is further configured to:
bind the first link to the second link to receive the data from or provide the data to the second apparatus via the first band and the second band.

5. The apparatus of claim 4,
wherein the processing system is configured to establish the first link by creating an encrypted token, and
wherein the processing system is configured to bind by receiving via the second band a message from the second apparatus verifying knowledge of the encrypted token.

6. The apparatus of claim 1, further comprising at least one antenna via which the first and second links are established, wherein the apparatus is configured as a wireless node.

7. A method (700) of wireless communication at an apparatus, comprising:
establishing (705) a first link with a second apparatus via first band, wherein the first link is associated with a first medium access control, MAC address;
establishing (710) a second link with the second apparatus via a second band using a tunneling protocol, wherein the tunneling protocol uses the first link to establish the second link and the second link is associated with a second MAC address;
receiving (715; 730) data from the second apparatus via at least one of the first link or the second link; and
providing (720; 725) data to the second apparatus via at least one of the first link or the second link,
wherein the data received or provided via the first link includes the first MAC address, and
wherein the data received or provided via the second link includes the second MAC address.

8. The method (700) of claim 7, wherein:
the establishing the first link comprises establishing a first encryption key for the first link; and
the establishing the second link comprises establishing a second encryption key for the second link.

9. The method (700) of claim 7, wherein:
the second MAC address associated with the second link is provided to or received from the second apparatus via the first link.

10. The method (700) of claim 7, wherein the apparatus is configured to be connected to a gateway (308), and wherein the receiving or providing comprises:
setting the second MAC address associated with the second link to a MAC address of the gateway (308),
wherein the data received from or provided to the second apparatus via the second link includes the MAC address of the gateway (308).

11. The method (700) of claim 7, further comprising:
binding the first link to the second link to receive the data from or provide the data to the second apparatus via the first band and the second band.

12. The method (700) of claim 11, wherein at least a first portion of the data is received or provided via the first band and at least a second portion of the data is received or provided via the second band.

13. The method (700) of claim 11, wherein the establishing the first link comprises creating an encrypted token, and
wherein the binding comprises receiving via the second band a message from the second apparatus verifying knowledge of the encrypted token.

14. The method (700) of claim 11, wherein the binding comprises utilizing a same MAC address for receiving or providing the data via the first band and the second band.

15. A computer program comprising program instructions which are computer-executable to implement all steps of the method of one of claims 7 to 14.

## Patentansprüche

1. Vorrichtung zur drahtlosen Kommunikation, umfassend:
Prozesssystem, das konfiguriert ist zum:
Einrichten (705) einer ersten Verbindung mit einer zweiten Vorrichtung über ein erstes Band, wobei die erste Verbindung mit einer ersten Medium Access Control, MAC-Adresse zusammenhängt;
Einrichten (710) einer zweiten Verbindung mit einer zweiten Vorrichtung über ein zweites Band unter Verwendung eines Tunnel-Protokolls, wobei das Tunnel-Protokoll die erste Verbindung nutzt, um die zweite Verbindung einzurichten, und wobei die zweite Verbindung mit einer zweiten MAC-Adresse zusammenhängt;
Empfangen (715; 730) von Daten von der zweiten Vorrichtung über die erste und/oder die zweite Verbindung,
Bereitstellen (720; 725) von Daten für die zweite Vorrichtung über die erste und/oder die zweite Verbindung,
wobei die über die erste Verbindung empfangenen oder bereitgestellten Daten die erste MAC-Adresse beinhalten, und
wobei über die zweite Verbindung empfangenen oder bereitgestellten Daten die zweite MAC-Adresse beinhalten.

2. Vorrichtung gemäß Anspruch 1, wobei:
die zweite MAC-Adresse, die mit der zweiten Verbindung zusammenhängt, von/zu der zweiten Vorrichtung über die erste Verbindung bereitgestellt oder empfangen wird.

3. Vorrichtung gemäß Anspruch 1, wobei die Vorrichtung dazu eingerichtet ist, an einen Gateway (308) angebunden zu werden, und wobei das Prozesssystem dazu konfiguriert ist, zu empfangen oder bereitzustellen durch:
Setzen der zweiten mit der zweiten Verbindung verbundenen MAC-Adresse auf eine MAC-Adresse des Gateways (308),
wobei die Daten, die über die zweite Verbindung von oder zu der zweiten Vorrichtung empfangen oder bereitgestellt werden, die MAC-Adresse des Gateways (308) beinhalten.

4. Vorrichtung gemäß Anspruch 1, wobei das Prozesssystem weiterhin konfiguriert ist zum:
Anbinden der ersten Verbindung an die zweite Verbindung, um von der zweiten Vorrichtung die Daten zu empfangen oder ihr bereitzustellen über das erste Band und das zweite Band.

5. Vorrichtung gemäß Anspruch 4,
wobei das Prozesssystem konfiguriert ist, die erste Verbindung durch Erzeugen eines verschlüsselten Token einzurichten, und
wobei das Prozesssystem dazu eingerichtet ist, die Anbindung herzustellen durch Empfangen einer Nachricht von der zweiten Vorrichtung über das zweite Band, die die Kenntnis über das verschlüsselte Token verifiziert.

6. Vorrichtung gemäß Anspruch 1, weiterhin umfassend wenigstens eine Antenne über welche die erste und zweite Verbindung eingerichtet werden, wobei die Vorrichtung als drahtloser Knoten konfiguriert ist.

7. Verfahren (700) zur drahtlosen Kommunikation bei einer Vorrichtung, umfassend:
Einrichten (705) einer ersten Verbindung mit einer zweiten Vorrichtung über ein erstes Band, wobei die erste Verbindung mit einer ersten Medium Access Control, MAC-Adresse zusammenhängt;
Einrichten (710) einer zweiten Verbindung mit einer zweiten Vorrichtung über ein zweites Band unter Verwendung eines Tunnel-Protokolls, wobei das Tunnel-Protokoll die erste Verbindung nutzt, um die zweite Verbindung einzurichten, und wobei die zweite Verbindung mit einer zweiten MAC-Adresse zusammenhängt;
Empfangen (715; 730) von Daten von der zweiten Vorrichtung über die erste und/oder die zweite Verbindung,
Bereitstellen (720; 725) von Daten für die zweite Vorrichtung über die erste und/oder die zweite Verbindung,
wobei die über die erste Verbindung empfangenen oder bereitgestellten Daten die erste MAC-Adresse beinhalten, und
wobei über die zweite Verbindung empfangenen oder bereitgestellten Daten die zweite MAC-Adresse beinhalten.

8. Verfahren (700) gemäß Anspruch 7, wobei:
das Einrichten der ersten Verbindung das Einrichten eines ersten Verschlüsselungsschlüssels für die erste Verbindung umfasst; und
das Einrichten der zweiten Verbindung das Einrichten eines zweiten Verschlüsselungsschlüssels für die zweite Verbindung umfasst.

9. Verfahren (700) gemäß Anspruch 7, wobei:
die zweite MAC-Adresse, die mit der zweiten Verbindung zusammenhängt, von/zu der zweiten Vorrichtung über die erste Verbindung bereitgestellt oder empfangen wird.

10. Verfahren (700) gemäß Anspruch 7, wobei die Vorrichtung dazu eingerichtet ist, an einen Gateway (308) angebunden zu werden, und wobei das Empfangen oder Bereitstellen umfasst:
Setzen der zweiten mit der zweiten Verbindung verbundenen MAC-Adresse auf eine MAC-Adresse des Gateways (308),
wobei die Daten, die über die zweite Verbindung von oder zu der zweiten Vorrichtung empfangen oder bereitgestellt werden, die MAC-Adresse des Gateways (308) beinhalten.

11. Verfahren (700) gemäß Anspruch 7, weiterhin umfassend:
Anbinden der ersten Verbindung an die zweite Verbindung, um von der zweiten Vorrichtung die Daten zu empfangen oder ihr bereitzustellen über das erste Band und das zweite Band.

12. Verfahren (700) gemäß Anspruch 11, wobei wenigstens ein erster Teil der Daten über das erste Band empfangen oder bereitgestellt werden und wenigstens ein zweiter Teil der Daten über das zweite Band empfangen oder bereitgestellt werden.

13. Verfahren (700) gemäß Anspruch 11, wobei das Einrichten der ersten Verbindung das Erzeugen eines verschlüsselten Tokens umfasst, und
wobei das Anbinden das Empfangen einer Nachricht von der zweiten Vorrichtung über das zweite Band umfasst, die die Kenntnis über das verschlüsselte Token verifiziert.

14. Verfahren (700) gemäß Anspruch 11, wobei das Anbinden das Verwenden derselben MAC-Adresse zum Empfangen oder Bereitstellen der Daten über das erste Band und über das zweite Band umfasst.

15. Computerprogramm umfassend Programm-Anweisungen, die auf einem Computer ausführbar sind, um alle Schritte des Verfahrens gemäß einem der Ansprüche 7 bis 14 zu implementieren.

## Revendications

1. Dispositif de communication sans fil comprenant :
un système de traitement configuré pour :
établir (705) une première liaison avec un deuxième dispositif par le biais d'une première bande, dans lequel la première liaison est associée à une première adresse de contrôle d'accès au support, MAC ;
établir (710) une deuxième liaison avec le deuxième dispositif par le biais d'une deuxième bande en utilisant un protocole de transmission tunnel, dans lequel le protocole de transmission tunnel utilise la première liaison pour établir la deuxième liaison et la deuxième liaison est associée à une deuxième adresse MAC ;
recevoir (715 ; 730) de données à partir du deuxième dispositif par le biais d'au moins une de la première liaison ou la deuxième liaison ; et
délivrer (720 ; 725) des données au deuxième dispositif par le biais d'au moins une de la première liaison ou la deuxième liaison,
où les données reçues ou délivrées par le biais de la première liaison comprennent la première adresse MAC, et
où les données reçues ou délivrées par le biais de la deuxième liaison comprennent la deuxième adresse MAC.

2. Dispositif selon la revendication 1, dans lequel :
la deuxième adresse MAC associée à la deuxième liaison est délivrée au ou reçu à partir du deuxième dispositif par le biais de la première liaison.

3. Dispositif selon la revendication 1, dans lequel le dispositif est configuré pour être connecté à une passerelle (308) et dans lequel le système de traitement est configuré pour recevoir ou délivrer :
le paramétrage de la deuxième adresse MAC associée à la deuxième liaison à une adresse MAC de la passerelle (308),
dans lequel les données reçues à partir du ou délivrées au deuxième dispositif par le biais de la deuxième liaison comprennent l'adresse MAC de la passerelle (308).

4. Dispositif selon la revendication 1, dans lequel le système de traitement est configuré pour:
rattacher la première liaison à la deuxième liaison pour recevoir les données à partir du ou délivrer les données au deuxième dispositif par le biais de la première bande et de la deuxième bande.

5. Dispositif selon la revendication 4,
dans lequel le système de traitement est configuré pour établir la première liaison en créant un jeton crypté, et
dans lequel le système de traitement est configuré pour se rattacher en recevant par le biais de la deuxième bande un message provenant du deuxième dispositif, vérifiant la connaissance du jeton crypté.

6. Dispositif selon la revendication 1, comprenant en outre au moins une antenne par le biais de laquelle les première et deuxième liaisons sont établies, dans lequel le dispositif est configuré comme un noeud sans fil.

7. Procédé (700) de communication sans fil au niveau d'un dispositif, comprenant :
l'établissement (705) d'une première liaison avec un deuxième dispositif par le biais d'une première bande, dans lequel la première liaison est associée à une première adresse de contrôle d'accès au support, MAC ;
établir (710) une deuxième liaison avec le deuxième dispositif par le biais d'une deuxième bande en utilisant un protocole de transmission tunnel, dans lequel le protocole de transmission tunnel utilise la première liaison pour établir la deuxième liaison et la deuxième liaison est associée à une deuxième adresse MAC ;
recevoir (715 ; 730) de données à partir du deuxième dispositif par le biais d'au moins une de la première liaison ou la deuxième liaison ; et
délivrer (720 ; 725) des données au deuxième dispositif par le biais d'au moins une de la première liaison ou la deuxième liaison,
où les données reçues ou délivrées par le biais de la première liaison comprennent la première adresse MAC, et
où les données reçues ou délivrées par le biais de la deuxième liaison comprennent la deuxième adresse MAC.

8. Procédé (700) selon la revendication 7, dans lequel :
l'établissement de la première liaison comprend l'établissement d'une première clé de cryptage pour la première liaison ; et
l'établissement de la deuxième liaison comprend l'établissement d'une deuxième clé de cryptage pour la deuxième liaison.

9. Procédé (700) selon la revendication 7, dans lequel :
la deuxième adresse MAC associée à la deuxième liaison est délivrée au ou reçue à partir du deuxième dispositif par le biais de la première liaison.

10. Procédé (700) selon la revendication 7, dans lequel le dispositif est configuré pour être connecté à une passerelle (308) et dans lequel la réception ou la délivrance comprend :
le paramétrage de la deuxième adresse MAC associée à la deuxième liaison à une adresse MAC de la passerelle (308),
dans lequel les données reçues à partir du ou délivrées au deuxième dispositif par le biais de la deuxième liaison comprennent l'adresse MAC de la passerelle (308).

11. Procédé (700) selon la revendication 7, comprenant en outre :
le rattachement la première liaison à la deuxième liaison pour recevoir les données à partir du ou délivrer les données au deuxième dispositif par le biais de la première bande et de la deuxième bande.

12. Procédé (700) selon la revendication 11, dans lequel au moins une première portion des données est reçue ou délivrée par le biais de la première bande et au moins une deuxième portion des données est reçue ou délivrée par le biais de la deuxième bande.

13. Procédé (700) selon la revendication 11, dans lequel l'établissement de la première liaison comprend la création d'un jeton crypté, et
dans lequel le rattachement comprend la réception par le biais de la deuxième bande d'un message provenant du deuxième dispositif, vérifiant la connaissance du jeton crypté.

14. Procédé (700) selon la revendication 11, dans lequel le rattachement comprend l'utilisation d'une même adresse MAC pour recevoir ou délivrer les données par le biais de la première bande et de la deuxième bande.

15. Programme informatique comprenant des instructions de programme qui sont exécutables par ordinateur pour mettre en oeuvre toutes les étapes du procédé selon l'une des revendications 7 à 14.
